# EUROPÄISCHE PATENTSCHRIFT

(11) **EP 0 534 105 B1**
(45) Veröffentlichungstag und Bekanntmachung des Hinweises auf die Patenterteilung: **28.02.1996**
(21) Anmeldenummer: 92113412.8
(22) Anmeldetag: 06.08.1992
(51) Int. Cl.: F23L 15/04

(54) **Industriebrenner mit rekuperativer Luftvorwärmung, insbesondere zur Beheizung von Ofenräumen von Industrieöfen**
Industrial burner using recuperative air preheating, especially for heating the chambers of industrial furnaces
Brûleur industriel avec préchauffage de l'air, en particulier pour chauffer les chambres des fours industriels

(30) Priorität: 27.09.1991 DE 4132236
(43) Veröffentlichungstag der Anmeldung: 31.03.1993
(73) Patentinhaber: WS Wärmeprozesstechnik GmbH, D-71272 Renningen (DE)
(72) Erfinder: Wünning, Joachim Dr.-Ing., W-7250 Leonberg 7 (DE)
(74) Vertreter: Rüger, Rudolf, Dr.-Ing.

(56) Entgegenhaltungen:
- EP-A- 0 296 032
- EP-A- 0 324 043

## Beschreibung

Die Erfindung betrifft einen Industriebrenner mit rekuperativer Luftvorwärmung, insbesondere zur Beheizung von Ofenräumen von Industrieöfen mit den Merkmalen des Oberbegriffs des Patentanspruchs 1.

Ein Industriebrenner mit diesen Merkmalen ist aus der EP-A-0 296 032 bekannt. Er weist ein aus hitzebeständigem Material bestehendes Rekuperatorrohr auf, das über einen angeformten Ringflansch mit einem Gehäuseteil verspannt ist, das den Brennerkopf trägt. Ein innerhalb des Rekuperatorrohres angeordneter Luftleitzylinder ist gegen den Brennerkopf axial über eine Feder vorgespannt.

Das Ergebnis neuerer Entwicklungen sind Rekuperatorbrenner mit keramischem Rekuperator, wie sie bspw. in der EP 0 324 043 A1 beschrieben sind. Für den Rekuperator werden dabei keramische Werkstoffe mit hoher Wärmeleitfähigkeit benutzt, bspw. SiC (λ ∼ 100 W/Km).

Diese Brenner weisen eine Abgassammeleinrichtung in Gestalt einer Abgashaube auf, an die als Abgasableitmittel ein Abgasstutzen angeschlossen ist und mit der der Rekuperator verbunden ist. Der Brennstoffzuführkanäle etc. enthaltende Brennerkopf ist unter Zwischenlage einer Dichtung unmittelbar an der Abgashaube befestigt, oder aber er ist konstruktiv in diese integriert.

In der Praxis hat sich nun gezeigt, daß der Brennerkopf sehr heiß werden kann, so daß teilweise die Grenztemperatur von Aluminiumguß überschritten wird, wodurch die Ventile für die Brennstoffzufuhr und gegebenenfalls die Luftzufuhr nicht mehr unmittelbar am Brennerkopf montiert werden können, während gleichzeitig die Gefahr von Verbrennungen bei Berührung besteht. Bekannte Maßnahmen wie thermische Isolierung der Abgashaube und/oder deren Kühlung mit Luft haben sich als unzweckmäßig oder nicht ausreichend erwiesen.

Aufgabe der Erfindung ist es, hier abzuhelfen.

Zur Lösung dieser Aufgabe ist zwischen dem Brennerkopf und dem Rekuperator eine Abstandsdüse aus einem Werkstoff mit geringer Wärmeleitfähiakeit angeordnet, durch die der Brennerkopf thermisch isoliert ist.

Die Abstandshülse wirkt als ein thermisches Trennmittel, durch das sich erreichen läßt, daß die Temperaturdifferenz zwischen dem Brennerkopf und der Umgebung bspw. kleiner als 80 K, erfordererlichenfalls sogar kleiner als 30 K, gehalten ist.

Die Abstandshülse ist mit Vorteil in dem Bereich zwischen der Abgassammeleinrichtung, insbesondere einer Abgashaube, und dem Brennerkopf angeordnet. Sie kann aus einem austenitischen Stahl bestehen, dessen Wärmeleitfähigkeit vielfach kleiner als jene von SiC ist.

Um eine gasdichte Verbindung zwischen dem Brennerkopf und dem Rekuperator unabhängig von den im Betrieb auftretenden thermischen Längenänderungen der beheizten Teile sicherzustellen, ist es zweckmäßig, daß die Abstandshülse axial federnd verspannt ist. Sie kann mittels federnder Zuganker zwischen dem Brennerkopf und dem Rekuperator oder der Abgassammeleinrichtung gasdicht verspannt sein.

Zur Beseitigung der Gefahr von Verbrennungen kann die thermische Abstandshülse und/oder die Abgassammeleinrichtung zumindest teilweise von einem Berührungsschutz umgeben sein, der z.Bsp. ein Schutzelement aufweisen kann, das an dem Brennerkopf befestigt ist. Ein solches Schutzelement kann bspw. ein Schutzgitter oder ein Lochblech sein, das die Abgashaube umhüllt, ohne sie zu berühren.

In der Zeichnung ist ein Ausführungsbeispiel des Gegenstandes der Erfindung dargestellt. Es zeigen:
- Fig. 1: einen Rekubrenner gemäß der Erfindung, im axialen Schnitt, in einer Seitenansicht und in schematischer Darstellung,
- Fig. 2: den Brennerkopf des Rekubrenners nach Fig. 1, geschnitten längs der Linie II-II der Fig. 1, in einer Draufsicht, und
- Fig. 3: den Rekubrenner nach Fig. 1, in abgewandelter Ausführungsform als Mantelstrahlheizrohr, in einer entsprechenden Darstellung und im Ausschnitt.

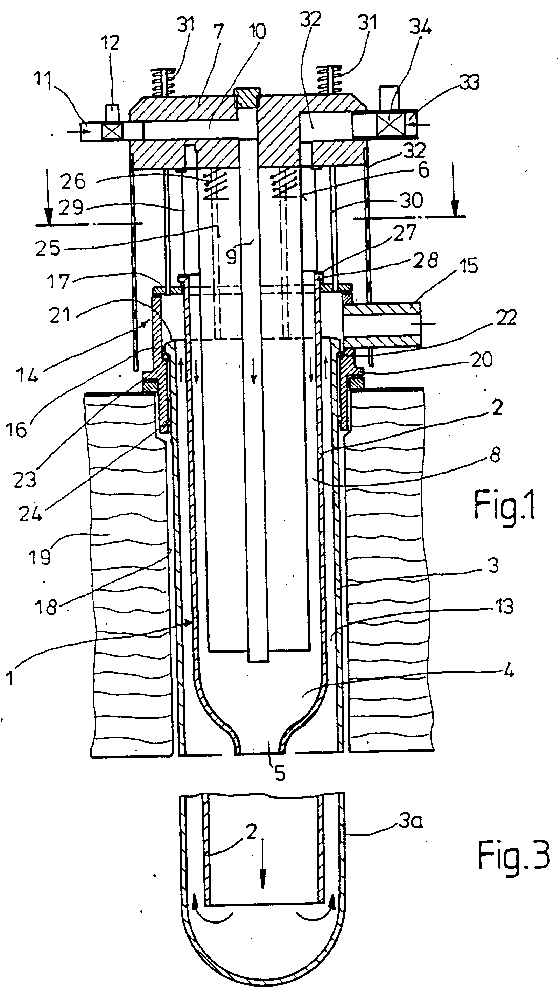

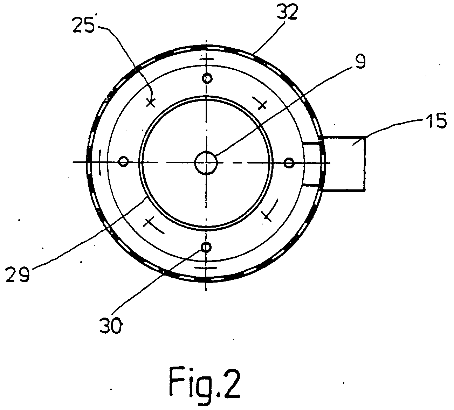

Der in den Fig. 1,2 dargestellte Industriebrenner mit rekuperativer Luftvorwärmung ("Rekubrenner") weist einen rohrförmigen Rekuperator 1 auf, der aus einem innenliegenden zylindrischen, aus SiC bestehenden Rekuperatorrohr 2 und einem dieses mit radialem Abstand umgebenden, ebenfalls aus SiC bestehenden Abgasführungsrohr 3 besteht. Das Rekuperatorrohr 2 enthält eine Brennkammer 4, von der stirnseitig eine koaxiale Strahldüse 5 kleineren Durchmessers abgeht.In das Rekuperatorrohr 2 ragt ein aus Stahl bestehender Luftleitzylinder 6, der an einem vorzugsweise aus Aluminiumdruckguß hergestellten Brennerkopf 7 befestigt ist und mit der Innenwand des koaxialen Rekuperatorrohres 2 einen der Verbrennungsluftzuführung dienenden Ringkanal 8 begrenzt. Durch den Luftleitzylinder 6 verläuft eine koaxiale Brennstofflanze 9, die an dem Brennerkopf 7 befestigt und mit einem in diesem ausgebildeten Brennstoffzufuhrkanal 10 verbunden ist, der zu einem Brennstoffanschlußstutzen 11 führt. Die Brennstoffzufuhr kann durch ein den Brennstoffanschlußstutzen 11 nachgeschaltetes Brennstoffventil 12 in dem Brennerkopf 7 geregelt werden.

Das Abgasführungsrohr 3 und das Rekuperatorrohr 2 begrenzen zwischen sich einen Ringkanal 13, der im Betrieb mit den Verbrennungsabgasen beaufschlagt ist und in eine Abgassammeleinrichtung 14 mündet, die außerhalb des beheizten Ofenraumes angeordnet ist und als Abgasableitmittel einen Abgasstutzen 15 aufweist. Die Abgassammeleinrichtung 14 besteht im wesentlichen aus einer zweiteiligen Abgashaube, die aus einem im wesentlichen zylindrischen Gehäuseteil 16 und einem auf dieses gasdicht aufgesetzten Deckel 17 in Gestalt einer Kreisringscheibe besteht. Das Gehäuseteil 17 ist in eine entsprechende Öffnung 18 der bei 19 angedeuteten Ofenwand eingesetzt, an der es mittels eines angeformten Flansches 20 außen befestigt ist. In das Gehäuseteil 16 ist das Abgasführungsrohr 3 eingeschoben, das über einen endseitig angeformten Ringflansch 21 unter Zwischenlage eines Dichtungsringes 22 gegen eine Ringschulter 23 an der Innenwand des Gehäuseteils 16 axial abgestützt ist. Ein weiterer Dichtungsring 24 dichtet den zwischen einander gegenüberliegenden zylindrischen Bereichen des Gehäuseteils 16 und des Abgasführungsrohres 3 vorhandenen Ringspalt ab. Rings um den Umfang des Abgasführungsrohres 3 verteilt angeordnete achsparallele Druckstäbe 25, die unter der Wirkung von Druckfedern 26 stehen, drücken das Abgasführungsrohr 3 in Achsrichtung mit seinem Ringflansch 21 elastisch gegen den Dichtungsring 23 und die Ringschulter 20, so daß eine einwandfreie Abdichtung gewährleistet ist und Temperaturspannungen an der bruchempfindlichen Keramik des Abgasführungsrohres 3 ausgeschlossen sind. Die Druckstäbe 25 sind über die Druckfedern 26 gegen den Brennerkopf 7 abgestützt, wie dies in Fig. 3 gestrichelt angedeutet ist. An der Abgassammeleinrichtung 14 ist außerdem das Rekuperatorrohr 2 befestigt, das an seinem zylindrischen Teil endseitig einen angeformten Ringflansch 27 trägt, über den es unter Zwischenlage eines Dichtrings 28 auf dem es umgebenden ringförmigen Deckelteil 17 der Abgashaube abgestützt ist.

Zwischen dem Brennerkopf 7 und den Rekuperator 1 ist ein thermisches Trennmittel geringer Wärmeleitfähigkeit angeordnet, das in Gestalt einer aus austenitischem Stahl bestehenden dünnwandigen Abstandshülse 29 gebildet ist, die sich einenends auf dem Ringflansch 27 des Rekuperatorrohrs 2 und sich andernends gegen die Innenfläche des Brennerkopfes 7,gegebenenfalls unter Zwischenlage von Dichtringen, abstützt. Um eine gasdichte Verbindung zwischen der Abstandshülse 29 und dem Brennerkopf 7 sowie dem Rekuperatorrohr 2 sicherzustellen, ohne daß Temperaturspannungen an dem bruchempfindlichen keramischen Rekuperatorrohr 2 auftreten, sind rings um die Abstandshülse 29 im radialen Abstand verteilt angeordnete Zuganker 30 vorgesehen, die einenends an dem Deckelteil 17 der Abgashaube befestigt, sich andernends durch entsprechende Bohrungen des Brennerkopfes 7 erstrecken und gegen diesen über Druckfedern 31 abgestützt sind.

Schließlich sind,um Verbrennungen bei der Berührung der Gehäuseteile 16, 17 der Abgassammeleinrichtung 14 oder der Abstandshülse 29 zu vermeiden, besondere Maßnahmen zum Berührungsschutz vorgesehen. Dieser Berührungsschutz weist eine zylindrische Schutzwand 32 aus Lochblech oder Stahlgitter auf, die an dem Brennerkopf 7 befestigt ist und die Gehäuseteile 16, 17 mit radialem Abstand umgibt, ohne diese zu berühren.

Die Abstandshülse 29 bildet gleichzeitig einen Teil einer Zufuhreinrichtung für Verbrennungsluft zu der Brennkammer 4. Diese Luftzufuhreinrichtung weist einen in dem Brennerkopf 7 ausgebildeten Luftzuführungskanal 32 auf, der über die Abstandshülse 29 mit dem Ringkanal 8 in Verbindung steht und in den ein Luftanschlußstutzen 33 mündet, dem ein Luftregelventil 34 in dem Brennerkopf 7 zugeordnet ist.

Im Betrieb sind die beiden Ringkanäle 8, 13 des Rekuperators 1 im Gegenstrom, wie durch Pfeile in Fig. 1 angedeutet, von Verbrennungsluft und Verbrennungsabgasen durchströmt. Da die beiden Ringkanäle 8, 13 durch die gut wärmeleitende Wandung des Rekuperatorrohres 2 thermisch miteinander gekoppelt sind, wird ein großer Teil der in den Verbrennungsabgasen enthaltenen Wärmemenge zur Vorwärmung der Verbrennungsluft ausgenützt. Im Betrieb erfährt zwar die aus den metallischen Gehäuseteilen 16, 17 bestehende Abgashaube eine beträchtliche Erwärmung, doch ist der Wärmeübergang auf den Brennerkopf 7 durch die Abstandshülse 29 und die Zuganker 30 so gering, daß die darin enthaltenen Teile, bspw. die Ventile 12, 34, nicht gefährdet sind und auch keine Verbrennungsgefahr bei der Berührung des Brennerkopfes 7 besteht. Vor einer Berührung der heißen Gehäuseteile 16, 17 schützt, wie bereits erwähnt, die Schutzwand 32.

In Fig. 1 ist die Erfindung anhand eines Rekubrenners für direkte Bezeizung exörtert; sie kann in gleicher Weise aber auch bei Mantelstrahlheizrohren angewandt werden. Dies ist in Fig. 3 veranschaulicht. Das Abgasführungsrohr 3 ist dabei durch das endseitig verschlossene Mantel- oder Strahlrohr 3a ersetzt.

Die Wirksamkeit der thermischen Trennung zwischen dem Brennerkopf 7 und der Abgassammeleinrichtung 14 kann anhand eines aus der Praxis gewonnenen Beispiels veranschaulicht werden:

Ein Rekubrenner mit einem Anschlußwert von 20 kW entsprechend einem Luftbedarf von 20 m³/h hat ein Rekuperatorrohr 2 aus SiC mit einem Durchmesser von 100 mm. Bei einer Ofentemperatur von 1200°C beträgt die Abgastemperatur 600°C und die Temperatur des Rekuperatorrohrs 2 am Lufteintritt ca. 300°C. Bei direkt angeflanschtem Brennerkopf 7 käme dessen Temperatur auf über 200°C.

Mit einer Abstandshülse 29 aus rostfreiem Stahl (15 W/Km) mit
einem Durchmesser von 100 mm
einer Länge von 100 mm
und einer Wanddicke von 1,5 mm
wird der Wärmestrom ohne Berücksichtigung der Verluste durch die Zylinderwand auf etwa 0,075 W/K reduziert, das heißt bei einer Rekuperatortemperatur von 300°C müssen nur noch rund 20 W über den Brennerkopf 7 abgeführt werden. Dabei stellt sich am Brennerkopf 7 und einem daran befestigten Berührungsschutzblech 32 nur noch eine Übertemperatur gegenüber der Umgebung von weniger als 20 K ein.

## Patentansprüche

1. Industriebrenner mit rekuperativer Luftvorwärmung, insbesondere zur Beheizung von Ofenräumen von Industrieöfen, mit einer Brennkammer (4), der Einrichtungen zur Brennstoff- und zur Verbrennungsluftzufuhr (7, 9; 32, 10) zugeordnet sind, von denen zumindest die Einrichtungen zur Brennstoffzufuhr wenigstens teilweise mit einem Brennerkopf (7) verbunden oder in diesem angeordnet sind, und mit einem koaxial zu der Brennkammer angeordneten rohrförmigen Rekuperator (1), der im Gegenstrom von Verbrennungsabgasen und von Verbrennungsluft durchströmte, thermisch miteinander gekoppelte Kanäle (13; 8) aufweist sowie mit einer dem Rekuperator zugeordneten und Abgasleitmittel aufweisenden Abgassammeleinrichtung (14) für die Verbrennungsabgase, die in fester räumlicher Zuordnung zu dem Brennerkopf angeordnet ist, dadurch gekennzeichnet, daß zwischen dem Brennerkopf (7) und dem Rekuperator (1) eine Abstandshülse (29) aus einem Werkstoff mit geringer Wärmeleitfähigkeit angeordnet ist, durch die der Brennerkopf thermisch isoliert ist.

2. Industriebrenner nach Anspruch 1, dadurch gekennzeichnet, daß die Abstandshülse (29) in dem Bereich zwischen der Abgassammeleinrichtung (14) und dem Brennerkopf (7) angeordnet ist.

3. Industriebrenner nach Anspruch 1 oder 2, dadurch gekennzeichnet, daß die Abstandshülse (29) axial federnd verspannt ist.

4. Industriebrenner nach Anspruch 1, dadurch gekennzeichnet, daß die dünnwandige Abstandshülse (29) aus einem austenitischen Stahl besteht.

5. Industriebrenner nach einem der vorhergehenden Ansprüche, dadurch gekennzeichnet, daß die Abstandshülse (29) und/oder die Abgassammeleinrichtung (14) zumindest teilweise von einem Berührungsschutz (32) umgeben sind.

## Claims

1. Industrial burner with recuperative air preheating, in particular for heating chambers of industrial furnaces, with a combustion chamber (4), to which means for supplying fuel and combustion air (7, 9; 32, 10) are allocated, of which means at least those for supplying fuel are connected, at least partly, to a burner cap (7) or are arranged therein, and with a tubular recuperator (1) arranged coaxially to the combustion chamber which has thermally coupled ducts (13; 8) with combustion exhaust gases and combustion air passing through them in counterflow, also with a exhaust gas collector means (14) for the combustion exhaust gases allocated to the recuperator and having exhaust gas guide means, said exhaust gas collector means being arranged in fixed spatial position relative to the burner cap, characterised in that a spacer sleeve (29) made of a material with low thermal conductivity is arranged between the burner cap (7) and the recuperator (1) to thermally insulate the burner cap.

2. Industrial burner according to Claim 1, characterised in that the spacer sleeve (29) is arranged in the area between the exhaust gas collector means (14) and the burner cap (7).

3. Industrial burner according to Claim 1 or 2, characterised in that the spacer sleeve (29) is held in position by axially resilient compression means.

4. Industrial burner according to Claim 1, characterised in that the thin-walled spacer sleeve (29) is made from an austenitic steel.

5. Industrial burner according to one of the preceding claims, characterised in that the spacer sleeve (29) and/or the exhaust gas collector means (14) are enclosed at least partially by a contact shield (32).

## Revendications

1. Brûleur industriel à préchauffage par récupération de l'air, destiné notamment au chauffage d'enceintes de fours industriels, avec une chambre de combustion (4) à laquelle sont associés des dispositifs (7, 9; 32, 10) d'alimentation en combustible et en air de combustion, parmi lesquels au moins les dispositifs d'alimentation en combustible sont au moins pour partie connectés à une tête de (7) de brûleur ou disposés à l'intérieur de celle-ci, avec un récupérateur (1) tubulaire qui est disposé de manière concentrique avec la chambre de combustion et comporte des canaux (13; 8) couplés thermiquement entre eux, qui sont parcourus à contre courant par les gaz de combustion et l'air de combustion, ainsi qu'avec un dispositif collecteur (14) des gaz de combustion associé au récupérateur et pourvu de moyens de guidage des gaz, qui occupe une position fixe dans l'espace par rapport à la tête de brûleur, caractérisé par le fait qu'une douille (29) d'espacement réalisée en un matériau présentant une faible conductibilité thermique, à l'aide de laquelle la tête de brûleur est isolée thermiquement, est placée entre la tête de brûleur (7) et le récupérateur

2. Brûleur industriel selon la revendication 1, caractérisé par le fait que la douille d'espacement (29) est disposée dans la région comprise entre le dispositif collecteur (14) des gaz de combustion et la tête de brûleur (7).

3. Brûleur industriel selon la revendication 1 ou 2, caractérisé par le fait que la douille d'espacement (29) est précontrainte élastiquement dans la direction axiale.

4. Brûleur industriel selon la revendication 1, caractérisé par le fait que la douille d'espacement (29), dont l'épaisseur de paroi est faible, est en acier austénitique.

5. Brûleur industriel selon l'une des revendications précédentes, caractérisé par le fait que la douille d'espacement (29) et/ou le dispositif collecteur (14) des gaz de combustion est (sont) au moins partiellement entouré(s) par un moyen de protection contre les contacts accidentels.
